# EUROPEAN PATENT SPECIFICATION

(11) **EP 3 359 721 B1**
(45) Date of publication and mention of the grant of the patent: **20.11.2019**
(21) Application number: 15813131.8
(22) Date of filing: 09.10.2015
(51) Int. Cl.: D06F 25/00, D06F 39/00

(54) **WASHING AND DRYING MACHINE**
WASCHTROCKNER
MACHINE À LAVER ET À SÉCHER

(43) Date of publication of application: 15.08.2018
(73) Proprietor: F.M.B. Fabbrica Macchine Bologna S.p.A., 40010 Sala Bolognese (IT)
(72) Inventor: BIAGI, Gino, 40012 Calderara di Reno (IT)
(74) Representative: Modiano, Micaela Nadia
(86) International application number: PCT/IT2015/000252
(87) International publication number: WO 2017/060928

(56) References cited:
- EP-A1- 1 548 173
- WO-A1-2015/024756
- WO-A1-2015/091671

## Description

The present invention relates to a washing and drying machine.

It is known to resort to professional machines for water washing of items of clothing, used in laundries and in large industrial washing facilities.

In such centers it is also necessary to proceed with the forced drying of the washed items of clothing, owing to the substantial impossibility to use natural drying as a consequence of exposure to the outside environment.

Therefore, washing machines and drying machines are present in the same industrial washing facility.

In some cases, such as for example in laundry shops or in some types of laundry for in-house use (of commercial or industrial organizations, schools, hospitals, cafeterias, etc.), there is the need to minimize the space occupation of washing machines and drying machines.

For this reason, use is made of hybrid machines capable of subjecting the items of clothing to water washing and to dry them once washing has been performed.

Such type of machine, usually known as washer-dryer, suffers problems and disadvantages.

First of all, their energy and water consumption is high and this, especially in the case of ongoing use, causes high operating costs.

Moreover, the release of large quantities of steam into the environment during drying penalizes the comfort of any operator who has to control them and in general of the people who are present.

The need to integrate two different devices in a same machine, moreover, makes it necessary to renounce some constructive solutions (typical of the more advanced washing machines or of the more advanced drying machines), leading to a potential efficiency of the washing and drying operations that is substantially lower than that of traditional versions (washing machine and drying machine as distinct elements).

A further limitation that can be observed in known types of washing and drying machines resides in the ability to perform exclusively water washes, thus limiting the field of application.

WO2015091671 discloses a device for utilizing the heat from wastewater in a laundry treatment machine, comprising a heat reservoir that is connected to a wastewater pipe. Heated wastewater can be fed to the heat reservoir via the wastewater pipe, and the residual heat from the wastewater can be stored in the heat reservoir. In order to be able to utilize the residual heat for heating process air, the heat reservoir is heat-conductively connected to a process air pipe in order for stored residual heat to be conducted into process air.

The aim of the present invention is to solve the problems described above, by devising a washing and drying machine that has a lower energy consumption than machines of the known type.

Within this aim, an object of the invention is to provide a washing and drying machine that has a lower water consumption than that of machines of the known type.

Another object of the invention is to provide a washing and drying machine that does not release steam into the environment except in substantially negligible quantities.

Another object of the invention is to provide a washing and drying machine with high efficiency of the steps of each washing and drying operation.

Another object of the invention is to provide a washing and drying machine that is suitable also for performing dry cleaning.

Another object of the invention is to provide a washing and drying machine of a type that is substantially different with respect to machines of the known type.

A further object of the present invention is to provide a washing and drying machine that has low costs, is relatively simple to provide in practice and is safe in application.

In accordance with the invention, there is provided a washing and drying machine as defined in the appended claims.

Further characteristics and advantages of the invention will become better apparent from the description of a preferred but not exclusive embodiment of the washing and drying machine according to the invention, illustrated by way of nonlimiting example in the accompanying drawings, wherein:

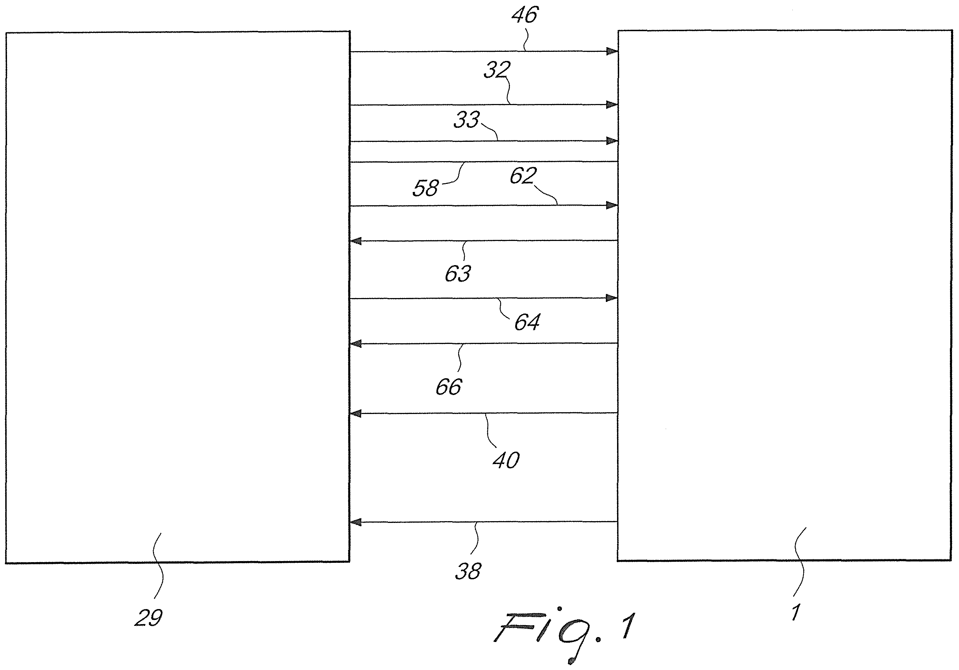

Figure 1 is a block diagram of the coupling criterion of a washing and drying machine according to the invention with an auxiliary solvent washing unit;

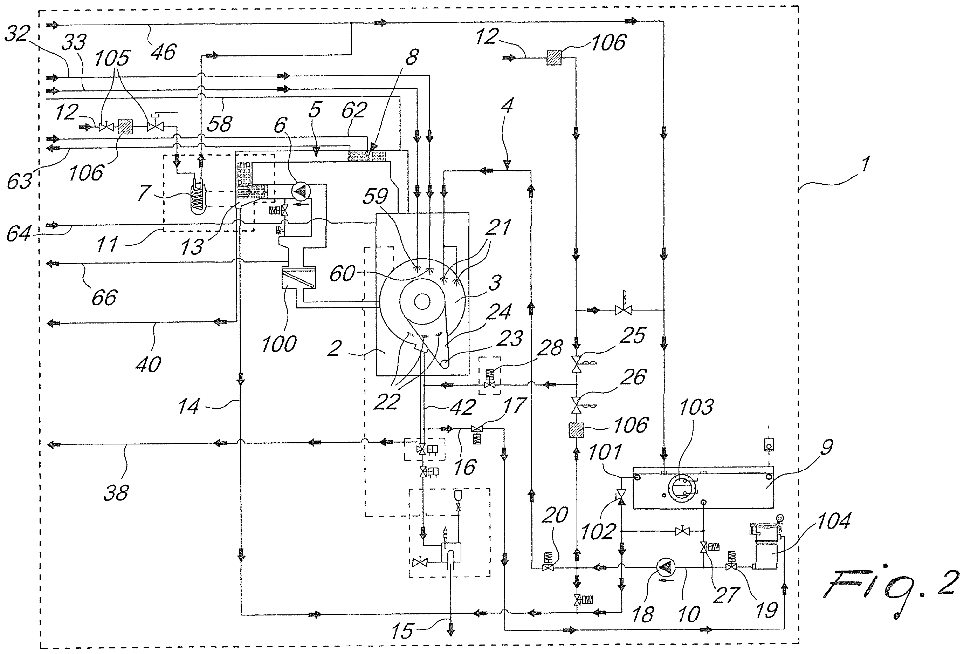

Figure 2 is a hydraulic diagram of the washing and drying machine according to the invention;

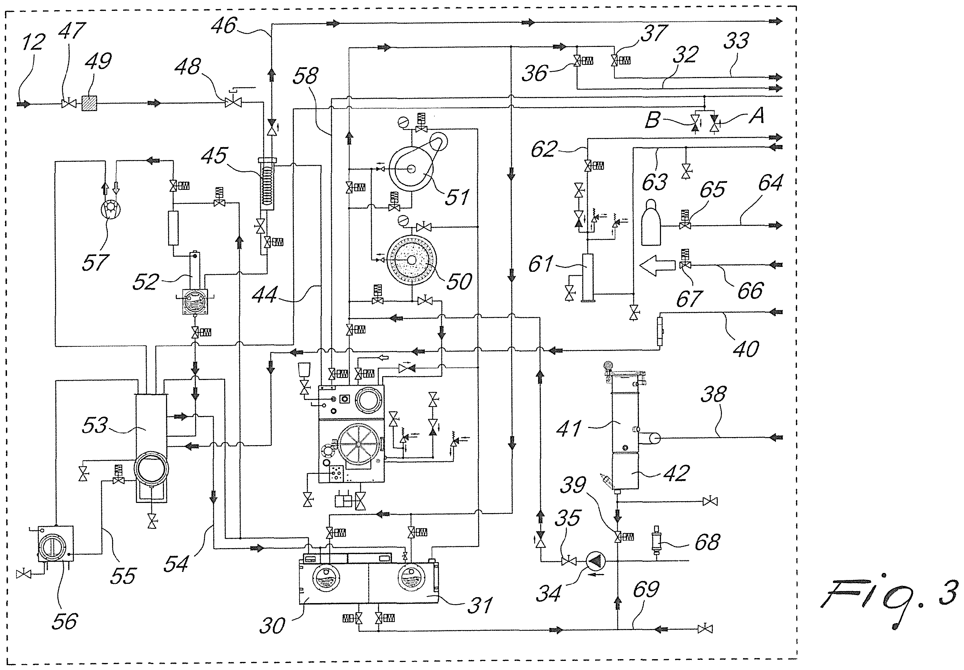

Figure 3 is the hydraulic diagram of an auxiliary solvent washing unit.

With reference to the figures, the numeral 1 generally designates a washing and drying machine.

The typical machine 1 comprises a processing chamber 2 provided with a basket 3 for accommodating the items (for example of clothing) to be washed and dried.

The machine 1 further comprises a circuit 4 for introducing water in the processing chamber 2, with which an optional circuit for introducing detergents, additives and the like (not shown in the accompanying figures) can be associated.

Finally, the machine 1 comprises a pneumatic circuit 5 for conveying an air stream through the basket 3, which has the purpose of drying the items (for example of clothing) contained therein.

According to the invention, the pneumatic circuit 5 comprises, downstream of the basket 3, at least one forced ventilation element 6, at least one water-based heat exchanger 7 for the optionally indirect cooling of the air stream that has exited from the basket 3 and the consequent condensation of the steam that is present therein, at least one heater 8 and a tank 9 for collecting the hot water in output from the heat exchanger 7.

The circuit 4 for introducing water in the processing chamber 2 comprises an intake line 10, which arrives, optionally indirectly, from the hot water collection tank 9.

According to the invention, therefore, the hot water that is present in the collection tank 9, accumulated therein following a previous drying operation, supplies the circuit 4 for introducing water in the processing chamber in washing operations that follow the predefined drying operation.

It is therefore possible to supply the circuit 4 for introducing hot water with water that is already hot, ensuring a considerable overall energy saving of the machine 1 according to the invention with respect to a traditional machine in which the stream of damp hot air that exits from the machine during drying would have been simply dissipated externally.

Furthermore, it is evident that the machine 1 according to the invention also offers greater comfort of the installation environment, since by not dissipating externally the heat produced for the drying operations it does not alter the temperature and humidity conditions of such environment.

It is specified, therefore, that according to a particularly simple constructive version of the machine 1 according to the invention the air stream conveyed through the pneumatic circuit 5 (directly after its exit from the basket 3) can flow directly over the water-based exchanger 7. In this manner, the stream of hot and humid air will cause heating of the water that flows in the exchanger 7 and at the same time a cooling of the air stream and a condensation of the water vapor that is present therein (therefore a drying).

In this embodiment the exchanger 7 removes heat from the air stream that arrives from the processing chamber 2 directly (the air stream flows over the walls of the exchanger 7 within which the water flows).

It is deemed useful to specify that according to a particularly efficient mode of execution suitable for optimum heat removal and drying of the air stream that exits from the basket 3, the machine 1 according to the invention comprises a refrigeration unit 11 for the cooling of the air stream that has exited from the basket 3 and for the consequent condensation of the vapor that is present therein.

The working fluid of the refrigeration unit 11 reaches the water-based heat exchanger 7 for its cooling.

In this mode of execution, the heat exchanger 7 removes heat from the air stream that arrives from the processing chamber 2 indirectly: it is in fact the working fluid, inside the refrigeration unit 11, that removes heat from the air stream, but the heat exchanger is preset to cool the working fluid proper, thus intervening indirectly for the cooling of the air stream that has exited from the processing chamber 2 (and its drying).

The working fluid, inside the exchanger 7, flows over the surfaces of the pipes for conveyance of the water that arrives from the water mains 12, with consequent transfer of heat to such water. The transfer of heat on the part of the working fluid of the refrigeration unit 11 to the water therefore causes a corresponding reduction of its temperature and a corresponding increase in temperature of the water.

In practice, therefore, the refrigeration unit 11 has the purpose of removing heat from the air stream that exits from the basket 3 during drying operations: this heat removal causes the condensation of the steam contained in the air stream and therefore causes a drying of such air stream (making it suitable for a subsequent pass through the basket 3 to dry the items of clothing or other items contained therein). To ensure that the air stream dried by the refrigeration unit 11 can perform effective drying of the content of the basket 3, downstream of the refrigeration unit 11, along the pneumatic circuit 5, the heaters 8 are provided, which heat the air stream again, making it therefore more efficient for drying.

Since heating of the working fluid occurs in the refrigeration unit 11 during the operations for cooling the air stream, the heat exchanger 7 is necessary in order to return the working fluid to a temperature that is suitable for its return to the refrigeration cycle.

The water that circulates in the heat exchanger therefore undergoes heating by utilizing heat energy to be dissipated: it is therefore possible to utilize this water, which normally would be eliminated through the discharge ducts (though being clean and having undergone no contamination, since it never makes direct contact with the working fluid), collecting it in the tank 9 in order to have, at the end of the drying process, a quantity of clean and already-hot water with which to perform subsequent washing operations.

For this reason, it is preferable for the tank 9 and the pipes that lead thereto to comprise thermal insulation coverings that avoid the transfer of heat to the outside in short times.

It is deemed useful to specify that the refrigeration unit 11 comprises at least one radiator that affects the air stream that exits from the processing chamber 2.

The working fluid circulates in the radiator and then enters the heat exchanger 7 to be cooled.

It is specified that below the radiator a hopper 13 is provided for collecting the water that has condensed as a consequence of the cooling of the steam comprised in the air stream. The hopper 13 in turn is provided with a duct for the discharge of the condensed water 14 (which is released, optionally following purifying operations, into the sewage ducts 15).

As described earlier, the pneumatic circuit 5, downstream of the at least one radiator, comprises a heater 8 to increase the temperature of the dry air stream that enters the processing chamber 2.

In practice, at the beginning of the day, the collection tank 9 is empty. Assuming that a washing and cold drying program or a drying-only program is started as a first cycle, in the optional washing step water drawn from the water mains 12 is used (it is necessary to open the valves 25 and 26 to connect the chamber 2 to the water mains 12).

During the drying step, the refrigeration system 11 is started, with a consequent indirect exchange of heat (within the pneumatic circuit 5) with the air stream that arrives from the chamber 2 and with heating of the water that flows in the exchanger 7 (i.e., a heat exchange of the indirect type occurs between the refrigeration fluid in output from the refrigeration unit 11 and the cooling water that flows in the condenser 7): the hot water that exits from the exchanger is sent into the tank 9 and can have a temperature of approximately 50°C (the value given is exclusively a nonlimiting example). Usually, during a drying step approximately 3 liters of water per minute can be transferred into the tank 9 (although this value is given exclusively by way of nonlimiting example). On the basis of these hypotheses, in the case of drying lasting 20 minutes, approximately 60 liters of hot water will have accumulated in the tank 9.

If this first cycle is followed by two other similar ones (either a washing and cold drying program or a water-based drying-only program), at the end of the third cycle the tank 9 might be full.

If, once this condition has been reached, a hot washing program is started, during the washing step it is possible to exclude the use of the water that arrives from the water mains 12 (by closing the valve 25) and send into the processing chamber 2 the hot water that is present in the tank 9 (by opening the valves 27, 26 and 28 and operating the pump 18): the fact that the water is already hot allows to minimize the use of the heating elements (for example electrical resistance heaters 22) that are present on the bottom of the processing chamber 2 and therefore allows a considerable energy saving.

In order to optimize the washing operations, the machine 1 comprises a circuit for the forced recirculation of washing water.

Such circuit affects the processing chamber 2: a branch 16 in output from the processing chamber 2, affected by at least one respective exclusion valve 17, leads to a pump 18 that has in output, on a return branch (the intake line 10), at least one closure valve 19, 20.

The return branch (i.e., the intake line 10) comprises at least one nozzle 21 for dispensing the washing water into the processing chamber 2.

Thanks to this mode of execution it is possible to introduce in the chamber 2 a certain quantity of water in an initial step of washing. Subsequently it is possible to start the forced recirculation circuit by opening the valves 17, 19 and 20 and operating the pump 18.

In order to obtain optimum mixing between the water and the detergents, additives and other substances introduced in the chamber 2, the nozzles 21 have a diameter that is considerably larger than the diameter of the intake tube (i.e., of the output branch 16): thanks to this constructive particularity, the water enters the chamber 2 by gravity as a spray; this mode ensures better mixing of the water with any additives and detergents.

It should be specified that the processing chamber 2 in any case comprises suitable electric resistance heaters 22 for heating the water contained therein: the adoption of other heating devices to transfer heat to the water inside the chamber 2 is not excluded.

It is noted that in a washing of a traditional type that does not use the forced recirculation circuit, once a certain quantity of water has been introduced in the chamber 2 it remains inside for the necessary washing operations while the basket 3 turns, usually driven by a main motor 23 to which it is coupled by means of a respective belt 24.

It is specified that in a version thereof that is particularly interesting from the point of view of application, the machine 1 can comprise an auxiliary solvent washing unit 29, which comprises at least one tank 30 and 31 for at least one solvent and at least one delivery duct 32 and 33.

The at least one duct 32 and 33 arrives from the at least one tank 30 and 31 for at least one solvent and leads into the processing chamber 2 of the machine 1.

The at least one delivery duct 32 and 33 is affected by at least one pump 34 and at least one closure valve 35, 36 and 37.

The auxiliary unit 29 further comprises at least one return duct 38, which arrives from the processing chamber 2 and leads to the at least one tank 30 and 31 for at least one solvent.

The return duct 38 also is affected by at least one closure valve 39.

In order to separate selectively the solvent residues that are present in the form of vapor in the air stream that circulates in the pneumatic circuit 5 during the drying operations, at least one additional return duct 40 is adopted which is arranged along the discharge duct of the hopper 13 of the refrigeration unit 11.

In practice the hopper 13 can discharge the residual water (collected following the condensation of the water vapor) through the discharge duct for the condensed water 14 and can discharge the residual solvent (collected as a consequence of the condensation of the respective vapors) through the return duct 40.

It is specified that the at least one return duct 38 can be affected positively by a suction element 41 for the forced removal of the solvents from the discharge duct 42 of the used washing fluids.

Downstream of the suction element it is possible to arrange a separator 42 of the type known in the field as "needle trap", preset for the filtering/separation of any small solid objects (such as for example needles) that might be present in the solvent.

It is deemed useful to specify that the auxiliary unit 29 may further comprise a distiller 43, for the separation of the solvent from any washing residues, arranged along the at least one delivery duct 32, 33, before sending such solvent to the processing chamber 2.

With reference to the constructive solution just described, it is specified that the auxiliary unit 29 may further comprise a pipe 44 for conveying the solvent vapors dispensed by the distiller 43 into a heat exchange unit 45, which is preset to remove heat from the solvent through a water stream with consequent condensation of such solvent and heating of the water (which arrives from the water mains 12).

The heated water can be positively transferred by means of specific channels 46 into the collection tank 9.

The water stream that arise from the water mains 12 in input in the heat exchange unit 45 can be interrupted (or adjusted) by means of the valves 47 and 48; such stream is further subjected to filtering through a specific filter 49.

It is deemed useful to specify that the solvent intended to be introduced in the processing chamber 2 (through the at least one delivery duct 32 and 33) can be subjected to specific filtering operations by means of filters 50 and 51: the purpose is to eliminate any residue that might contaminate the items to be washed that are present in the basket 3.

Moreover, it is deemed useful to specify that downstream of the heat exchange unit 45 it might be necessary to remove residues of water from the condensed solvent (these might also be merely residues due to the condensation of ambient moisture).

For this reason, the solvent that has just condensed can flow positively within a first separator 52 and subsequently within a second separator 53 provided with a first output branch 54 for the solvent that leads into one of the tanks 30, 31 and with a second output branch 55 for the water that leads into a respective collection container 56.

The flow of the solvent between the output of the heat exchange unit 45, the first separator 52 and the second separator 53, the tanks 30 and 31 and the collection container 56 is ensured by means of a specific pump 57.

It is specified that the distiller 43 can further comprise a second output 58 that is affected by a valve that opens when it is necessary to return the distiller 43 to atmospheric pressure (the valve arranged along the output 58 is termed "vacuum breaker" valve).

The air, if it is necessary to return the distiller 43 to atmospheric pressure, enters from the valve A: the valve A, as well as the valve B, due to their construction open when there is a predefined pressure differential across their ends.

When the distiller 43 is in a negative pressure condition (vacuum), the valve arranged along the output 58 opens; a pressure differential occurs at the ends of the valve A and therefore the valve A opens, allowing air to enter, and closes automatically once the pressure differential has decreased to a predefined value.

Should the processing chamber 2, for various reasons, enter negative pressure conditions (so-called vacuum conditions), the valve A can open in order to allow air to enter and closes automatically once the differential has decreased to a predefined value.

Likewise, should the processing chamber 2, for various reasons, enter overpressure conditions (a pressure that is higher than atmospheric pressure, according to preset trigger thresholds), the valve B opens in order to allow air to exit (vent) and closes automatically once the differential has decreased to a further predefined value.

Effectively, the at least one delivery duct 32 and 33 can comprise (inside the chamber 2) dispensing nozzles 59 and 60 that ensure optimum distribution of the solvent on the content of the basket 3.

At least one boiler 61 is installed inside the housing that contains the auxiliary unit 29: its output affects directly the pneumatic circuit 5, constituting a respective heater 8, while its input constitutes the return path from the pneumatic circuit 5.

Thanks to the boiler 61, a more efficient heating of the air stream that circulates in the pneumatic circuit 5 is possible.

Finally, it is specified that pipes are provided which are intended to render inert the processing chamber 2 (i.e., components intended to intervene if temperature values that exceed a predefined threshold are reached inside the processing chamber 2): a first pipe 64 connects the inside of the chamber 2 to a cylinder that contains nitrogen (coolant) in case of high temperature values detected in the chamber and transmitted to the valve 65 (of the electrically actuated type); a second pipe 66 connects the inside of the pneumatic circuit 5 to the outside environment and allows the exit of the jet of nitrogen optionally actuated previously following a detection of an excessive temperature.

The possibility to insert in the auxiliary unit 2 a pump 68 for the optional introduction of additives is not excluded; such pump is preferably arranged upstream of the pump 34.

Any periodic fillings of the tanks 30 and 31 with solvent are performed by means of a dedicated line 69.

Advantageously, the present invention solves the problems described previously, by providing a washing and drying machine 1 that has a lower energy consumption than that of machines of the known type: the possibility to use already-hot water for the washing operations that follow one (or more) drying operations ensures better utilization of the energy absorbed from the electrical mains and therefore lower energy consumptions.

Efficiently, the machine 1 also has a lower water consumption than that of machines of the known type: the water that is necessary to cool the air stream that exits from the processing chamber and circulates in the pneumatic circuit 5 is in fact reused for subsequent washes, whereas in a conventional machine it would be sent to a discharge pipe.

Conveniently, the machine 1 does not release steam into the environment, except in substantially negligible quantities: this occurs because the heat generated during drying is not dissipated externally but is "recycled" and is preserved inside the machine 1 proper in order to utilize the "waste" hot water for subsequent washing operations.

Favorably, the machine 1 can have a high efficiency of the steps of each washing and drying operation: as shown, in fact, water-based washing can be performed by means of a recirculation of the water that facilitates the mixing of the water with the detergents, ensuring the maximum effectiveness thereof; the drying operations are further optimum thanks to the optimum drying capacity of the air stream that circulates in the pneumatic circuit 5; during dry washing, also, high efficiency of the operations is observed as a consequence of the purity of the solvent (it has been observed that there are many components preset to purify the solvent).

Effectively, the machine 1 is suitable to perform also dry cleaning processes thanks to the presence of the auxiliary unit 29.

Advantageously, the machine 1 has structural, functional and constructive characteristics of a type that is substantially different with respect to machines of the known type.

Validly, the machine 1 is relatively simple to provide in practice, has low costs, and these characteristics make it a device that has an assured industrial application.

The invention thus conceived is susceptible of numerous modifications and variations, all of which are within the scope of the appended claims; all the details may further be replaced with other technically equivalent elements.

For example, it is possible to install filters 100 of various types at the first sections of the pneumatic circuit 5 so to prevent washing residues from reaching the refrigeration unit 11.

Likewise, the tank 9 can comprise a pipe 101 that is affected by a one-way valve 102 in order to ensure that water can be discharged from the tank 9 in conditions of excessive filling thereof.

For this purpose, the tank can comprise a window 103 for visual detection of the level reached by the water inside it.

It is specified that the output branch 16, upstream of the valve 19, can comprise a separation element 104 of the type known in the field as "needle trap".

The duct for introducing the water in the heat exchanger 7, which arrives from the water mains 12, also can comprise respective flow control valves 105 and filters 106.

Appropriate filters 106 are arranged also along the duct that comprises the valves 25 and 26 and arrives from the water mains 12.

In the illustrated examples of embodiment, individual characteristics, given in relation to specific examples, may actually be interchanged with other different characteristics that exist in other examples of embodiment.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A washing and drying machine of the type comprising a processing chamber (2) provided with a basket (3) for accommodating the items to be washed and dried, a circuit (4) for introducing water in said processing chamber (2), and a pneumatic circuit (5) for the conveyance of a stream of air through said basket (3), said pneumatic circuit (5) comprising, downstream of said basket (3), at least one forced ventilation element (6), and at least one water-based heat exchanger (7), **characterized in that** said water-based heat exchanger (7) is provided for cooling of the air stream that has exited from said basket (3) and the consequent condensation of steam that is present in said air stream, a heater (8) for increasing the temperature of the dry air stream that enters said processing chamber (2) and a collection tank (9) for collecting the hot water that exits from said heat exchanger (7), said circuit (4) for introducing water into said processing chamber (2) comprising an intake line (10) that arrives from said hot water collection tank (9), the hot water that is present in said collection tank (9), after a drying operation, supplying said circuit (4) for introducing water into said processing chamber (2) in washing operations that follow said drying operation.

2. The machine according to claim 1, **characterized in that** it comprises a refrigeration unit (11) for cooling the air stream that has exited from said basket (3) and for the consequent condensation of the steam that is present therein, said refrigeration unit (11) comprising working fluid reaching said water-based heat exchanger (7) to cool it, said working fluid, inside said water-based heat exchanger (7), striking the surfaces of pipes for conveying the water that arrives from a water mains (12) with consequent transfer of heat to said water, with a corresponding reduction of the temperature of the working fluid and an increase in the temperature of the water.

3. The machine according to claim 2, **characterized in that** said refrigeration unit (11) comprises at least one radiator that condenses humidity from the air stream that exits from said processing chamber (2), said working fluid cooled by said heat exchanger (7) circulating within said radiator, below said radiator there being a hopper (13) for collecting the water condensed from the steam comprised in the air stream, said hopper (13) being provided with a discharge duct for said condensed water (14).

4. The machine according to claim 3, **characterized in that** downstream of said at least one radiator it comprises said heater (8) in order to increase the temperature of the dry air stream that enters said processing chamber (2).

5. The machine according to claim 1, **characterized in that** it comprises a circuit (16) for the forced recirculation of washing water used in said processing chamber (2), and a dispensing nozzle (21) for dispensing the washing water into said processing chamber (2).

6. The machine according to claim 5, **characterized in that** said dispensing nozzle (21) is suitable for the spray dispersal of water into said basket (3) in order to facilitate its mixing with detergents, additives and like.

7. The machine according to claim 3, **characterized in that** it comprises an auxiliary unit (29) for washing with solvent of the type that comprises at least one tank (30, 31) for at least one solvent, at least one delivery duct (32, 33), which arrives from said tank (30, 31) for said at least one solvent and leads into said processing chamber (2), at least one pump (34) and at least one closure valve (35, 36, 37) for said delivery duct (32, 33), at least one return duct (38) that arrives from said processing chamber (2) and leads to said tank (30, 31) for said at least one solvent, said at least one return duct (38) being affected by at least one closure valve (39).

8. The machine according to claim 7, **characterized in that** at least one additional return duct (40) is arranged along the discharge duct of the hopper (13) of the refrigeration unit (11).

9. The machine according to claim 8, **characterized in that** said at least one return duct (38) is affected by a suction element (41) for the forced withdrawal of the solvents from a discharge duct (42) of the used washing fluids.

10. The machine according claim 9, **characterized in that** it comprises a distiller (43), for separating the solvent from any washing residues, arranged along the at least one said delivery duct (32, 33), before sending said solvent to the processing chamber (2)

11. The machine according to claim 10, **characterized in that** it comprises a pipe (44) for conveying vapors of said solvent dispensed by said distiller (43) into a heat exchange unit (45), preset to remove heat from the solvent through a water stream with consequent condensation of said solvent and heating of water that arrives from the water mains (12), said heated water being transferred into said collection tank (9).

## Patentansprüche

1. Ein Waschtrockner von der Art, die eine Arbeitskammer (2) umfasst, ausgestattet mit einem Korb (3) für die Aufnahme der zu waschenden und zu trocknenden Teile; einen Kreislauf (4) zum Einführen von Wasser in die Arbeitskammer (2) und einem Pneumatikkreis (5) zur Beförderung eines Luftstroms durch den Korb (3), wobei der Pneumatikkreis (5) stromabwärts von dem Korb (3) mindestens ein Zwangslüftungselement (6) und mindestens einen Wärmetauscher (7) auf Wasserbasis umfasst; **dadurch gekennzeichnet, dass** der Wärmetauscher (7) auf Wasserbasis bereitgestellt ist zum Kühlen des Luftstroms, der aus dem Korb (3) ausgetreten ist, und zur daraus folgenden Kondensation von Dampf, der in dem Luftstrom vorhanden ist; eine Heizvorrichtung (8) zum Erhöhen der Temperatur des Trockenluftstroms, der in die Arbeitskammer (2) eintritt; und einen Sammeltank (9) zum Sammeln des heißen Wassers, das aus dem Wärmetauscher (7) austritt; wobei der Kreislauf (4) zum Einführen von Wasser in die Arbeitskammer (2) eine Einlassleitung (10) umfasst, die von dem Heißwassersammeltank (9) kommt; wobei das heiße Wasser in dem Sammeltank (9) nach einem Trocknungsvorgang den Kreislauf (4) versorgt, um Wasser in Waschvorgängen nach dem Trocknungsvorgang in die Arbeitskammer (2) einzuführen.

2. Die Maschine gemäß Anspruch 1, **dadurch gekennzeichnet, dass** sie eine Kühleinheit (11) zur Kühlung des Luftstroms, der aus dem Korb (3) ausgetreten ist, und zur darauf folgenden Kondensation des Dampfes umfasst, der darin vorhanden ist; wobei die Kühleinheit (11) Arbeitsfluid umfasst, das den Wärmetauscher (7) auf Wasserbasis erreicht, um ihn zu kühlen; wobei das Arbeitsfluid innerhalb des Wärmetauschers (7) auf Wasserbasis auf die Oberflächen von Rohren zum Befördern des Wassers auftrifft, das von einer Hauptwasserleitung (12) kommt, mit daraus folgender Wärmeübertragung auf das Wasser, mit entsprechender Verringerung der Temperatur des Arbeitsfluids und Erhöhung der Wassertemperatur.

3. Die Maschine gemäß Anspruch 2, **dadurch gekennzeichnet, dass** die Kühleinheit (11) mindestens einen Strahler umfasst, der Feuchtigkeit aus dem Luftstrom, der aus der Arbeitskammer (2) austritt, zum Kondensieren bringt, wobei das von dem Wärmetauscher (7) gekühlte Arbeitsfluid in dem Strahler zirkuliert; wobei sich unterhalb des Strahlers ein Trichter (13) zum Sammeln des Wassers befindet, das aus dem Dampf im Luftstrom kondensiert; wobei der Trichter (13) mit einer Ablassleitung für das kondensierte Wasser (14) ausgestattet ist.

4. Die Maschine gemäß Anspruch 3, **dadurch gekennzeichnet, dass** sie stromabwärts von dem mindestens einen Strahler die Heizvorrichtung (8) umfasst, um die Temperatur des Trockenluftstroms zu erhöhen, der in die Arbeitskammer (2) eintritt.

5. Die Maschine gemäß Anspruch 1, **dadurch gekennzeichnet, dass** sie einen Kreislauf (16) für die Zwangsrückführung von Waschwasser umfasst, das in der Arbeitskammer (2) verwendet wird, und eine Abgabedüse (21) zum Abgeben des Waschwassers in die Arbeitskammer (2).

6. Die Maschine gemäß Anspruch 5, **dadurch gekennzeichnet, dass** die Abgabedüse (21) geeignet ist zur Sprühzerstreuung von Wasser in den Korb (3), um sein Mischen mit Detergenzien, Zusatzstoffen und dergleichen zu erleichtern.

7. Die Maschine gemäß Anspruch 3, **dadurch gekennzeichnet, dass** sie eine Zusatzeinheit (29) zum Waschen mit Lösungsmittel von der Art umfasst, die Folgendes umfasst: mindestens einen Behälter (30, 31) für mindestens ein Lösungsmittel, mindestens eine Abgabeleitung (32, 33), die von dem Behälter (30, 31) für das mindestens eine Lösungsmittel kommt und in die Arbeitskammer (2) führt, mindestens eine Pumpe (34) und mindestens ein Verschlussventil (35, 36, 37) für die Abgabeleitung (32, 33), mindestens eine Rückführleitung (38), die von der Arbeitskammer (2) kommt und zu dem Behälter (30, 31) für das mindestens eine Lösungsmittel führt; wobei die mindestens eine Rückführleitung (38) von mindestens einem Verschlussventil (39) beeinflusst wird.

8. Die Maschine gemäß Anspruch 7, **dadurch gekennzeichnet, dass** mindestens eine zusätzliche Rückführleitung (40) entlang der Abgabeleitung des Trichters (13) der Kühleinheit (11) angeordnet ist.

9. Die Maschine gemäß Anspruch 8, **dadurch gekennzeichnet, dass** die mindestens eine Rückführleitung (38) von einem Saugelement (41) zur Zwangsentnahme der Lösungsmittel aus einer Ablassleitung (42) für die verwendeten Waschfluide beeinflusst wird.

10. Die Maschine gemäß Anspruch 9, **dadurch gekennzeichnet, dass** sie einen Destillator (43) zum Trennen des Lösungsmittels von eventuellen Waschrückständen, angeordnet entlang der mindestens einen Abgabeleitung (32, 33), vor dem Leiten des Lösungsmittels zur Arbeitskammer (2) umfasst.

11. Die Maschine gemäß Anspruch 10, **dadurch gekennzeichnet, dass** sie eine Rohrleitung (44) zum Befördern von Dämpfen des Lösungsmittels, die von dem Destillator (43) abgegeben werden, in eine Wärmetauschereinheit (45) umfasst, die eingestellt ist, um Wärme aus dem Lösungsmittel durch einen Wasserstrom zu entfernen, mit darauf folgender Kondensation des Lösungsmittels und Erhitzung von Wasser, das von der Hauptwasserleitung (12) kommt, wobei das erhitzte Wasser in den Sammeltank (9) überführt wird.

## Revendications

1. Machine à laver et à sécher du type comportant une chambre de traitement (2) munie d'un panier (3) pour recevoir les articles à laver et à sécher, un circuit (4) pour introduire de l'eau dans ladite chambre de traitement (2), et un circuit pneumatique (5) pour le passage d'un flux d'air à travers ledit panier (3), ledit circuit pneumatique (5) comportant, en aval dudit panier (3), au moins un élément de ventilation forcée (6), et au moins un échangeur de chaleur à base d'eau (7), **caractérisée en ce que** ledit échangeur de chaleur à base d'eau (7) permet de refroidir le flux d'air qui a quitté ledit panier (3) et la condensation conséquente de vapeur qui est présente dans ledit flux d'air, un dispositif de chauffage (8) pour augmenter la température du flux d'air sec qui entre dans ladite chambre de traitement (2) et un réservoir de collecte (9) pour recueillir l'eau chaude qui sort dudit échangeur de chaleur (7), ledit circuit (4) destiné à introduire de l'eau dans ladite chambre de traitement (2) comportant une ligne d'admission (10) qui arrive dudit réservoir de collecte d'eau chaude (9), l'eau chaude qui est présente dans ledit réservoir de collecte (9), après une opération de séchage, fournissant ledit circuit (4) pour introduire de l'eau dans ladite chambre de traitement (2) pendant des opérations de lavage qui suivent ladite opération de séchage.

2. Machine selon la revendication 1, **caractérisée** ce qu'elle comporte une unité de réfrigération (11) pour refroidir le flux d'air qui a quitté ledit panier (3) et pour la condensation conséquente de la vapeur qui est présente dans celui-ci, ladite unité de réfrigération (11) comportant un fluide de travail atteignant ledit échangeur de chaleur à base d'eau (7) pour le refroidir, ledit fluide de travail, à l'intérieur dudit échangeur de chaleur à base d'eau (7), frappant les surfaces de tuyaux destinés à acheminer l'eau qui arrive d'un réseau de distribution d'eau (12) avec un transfert de chaleur conséquent à ladite eau, avec une réduction conséquente de la température du fluide de travail et une augmentation de la température de l'eau.

3. Machine selon la revendication 2, **caractérisée en ce que** ladite unité de réfrigération (11) comporte au moins un radiateur qui condense l'humidité provenant du flux d'air qui quitte ladite chambre de traitement (2), ledit fluide de travail refroidi par ledit échangeur de chaleur (7) circulant à l'intérieur dudit radiateur, sous ledit radiateur étant agencée une trémie (13) pour recueillir l'eau condensée à partir de la vapeur comprise dans le flux d'air, ladite trémie (13) étant pourvue d'une conduite d'évacuation pour ladite eau condensée (14) .

4. Machine selon la revendication 3, **caractérisée en ce qu'**en aval dudit au moins un radiateur, elle comporte ledit dispositif de chauffage (8) afin d'augmenter la température du flux d'air sec qui entre dans ladite chambre de traitement (2).

5. Machine selon la revendication 1, **caractérisée en ce qu'**elle comporte un circuit (16) pour la recirculation forcée d'eau de lavage utilisée dans ladite chambre de traitement (2), et une buse de distribution (21) pour distribuer l'eau de lavage dans ladite chambre de traitement (2).

6. Machine selon la revendication 5, **caractérisée en ce que** ladite buse de distribution (21) est adaptée pour la dispersion d'eau par pulvérisation dans ledit panier (3) afin de faciliter son mélange avec des détergents, des additifs et analogues.

7. Machine selon la revendication 3, **caractérisée en ce qu'**elle comporte une unité auxiliaire (29) pour un lavage avec un solvant du type qui comporte au moins un réservoir (30, 31) pour au moins un solvant, au moins une conduite de distribution (32, 33), qui arrive dudit réservoir (30, 31) pour ledit au moins un solvant et mène dans ladite chambre de traitement (2), au moins une pompe (34) et au moins une vanne de fermeture (35, 36, 37) pour ladite conduite de distribution (32, 33), au moins une conduite de retour (38) qui arrive de ladite chambre de traitement (2) et mène audit réservoir (30, 31) pour ledit au moins un solvant, ladite au moins une conduite de retour (38) étant affectée par au moins une vanne de fermeture (39).

8. Machine selon la revendication 7, **caractérisée en ce qu'**au moins une conduite de retour supplémentaire (40) est agencée le long de la conduite d'évacuation de la trémie (13) de l'unité de réfrigération (11).

9. Machine selon la revendication 8, **caractérisée en ce que** ladite au moins une conduite de retour (38) est affectée par un élément d'aspiration (41) pour le retrait forcé des solvants d'une conduite d'évacuation (42) des fluides de lavage utilisés.

10. Machine selon la revendication 9, **caractérisée en ce qu'**elle comporte un distillateur (43), pour séparer le solvant de tous résidus de lavage, agencé le long de ladite au moins une conduite de distribution (32, 33), avant d'envoyer ledit solvant vers la chambre de traitement (2).

11. Machine selon la revendication 10, **caractérisée en ce qu'**elle comporte un tuyau (44) pour acheminer des vapeurs dudit solvant distribué par ledit distillateur (43) dans une unité d'échange de chaleur (45), pré-réglée pour évacuer la chaleur du solvant par l'intermédiaire d'un courant d'eau avec une condensation conséquente dudit solvant et un chauffage de l'eau qui arrive du réseau de distribution d'eau (12), ladite eau chauffée étant transférée dans ledit réservoir de collecte (9) .
